# EUROPÄISCHE PATENTSCHRIFT

(11) **EP 4 216 377 B1**
(45) Veröffentlichungstag und Bekanntmachung des Hinweises auf die Patenterteilung: **22.07.2026**
(21) Anmeldenummer: 22210438.2
(22) Anmeldetag: 30.11.2022
(51) Int. Cl.: H01R 13/639, H01R 13/641, H01R 13/627

(54) **STECKVERBINDER**
PLUG-IN CONNECTOR
CONNECTEUR À FICHE

(30) Priorität: 20.01.2022 DE 102022101311
(43) Veröffentlichungstag der Anmeldung: 26.07.2023
(73) Patentinhaber: MD ELEKTRONIK GmbH, 84478 Waldkraiburg (DE)
(72) Erfinder: Hofmann, Thomas, 83342 Tacherting (DE); Hirschstetter, Lukas, 83533 Edling (DE)

(56) Entgegenhaltungen:
- EP-A2- 1 235 311
- WO-A1-2021/182035
- US-B1- 10 153 586
- US-B1- 9 680 256

## Beschreibung

### Technisches Gebiet

Die Erfindung betrifft einen Steckverbinder, einen Gegensteckverbinder und ein Steckverbindungssystem für eine elektrische und/oder optische Verbindung.

### Stand der Technik

Steckverbinder werden verwendet, um eine Leitung mit zumindest einer weiteren Leitung und/oder einem Bauteil, wie einer Leiterplatte, zu verbinden. Für die Weiterleitung von elektrischen Signalen mit hohen Datenraten werden insbesondere im Automotive Bereich USB-Verbindungen eingesetzt. Die Steckverbindungen, bevorzugt aufweisend einen Steckverbinder und einen passenden Gegensteckverbinder, die in einem Fahrzeug eingesetzt werden, müssen dabei neben einer sogenannten Primärverriegelung weiterhin zumindest ein CPA-Element (Connector Position Assurance) aufweisen, welches eine zusätzliche Sicherung der Verbindung gewährleistet.

Die Druckschrift US 9,680,256 B1 betrifft ein Verbindungssystem mit einem CPA-Element. Dabei umfasst ein elektrischer Verbinder ein Gehäuse mit einem Hohlraum, wobei der Hohlraum so eingerichtet ist, dass er einen passenden Verbinder darin aufnimmt, der entlang einer Steckachse eingeführt wurde, wobei das Gehäuse einen ersten Vorsprung enthält, der eine harte Anschlagfläche definiert. Der elektrische Verbinder umfasst weiterhin ein CPA-Element, das in eine eingeführte Position am Gehäuse geführt werden kann, um eine Verbindung zwischen dem elektrischen Verbinder und einem eingeführten passenden Verbinder zu sichern. Die harte Anschlagfläche am Gehäuse verhindert dabei ein Führen des CPA-Elements in die eingeführte Position, bevor nicht zunächst ein passender Verbinder in den elektrischen Verbinder eingeführt wurde.

Der elektrische Verbinder im Stand der Technik hat zumindest den Nachteil, dass die harte Anschlagfläche, die sich quer zur Verbindungsrichtung erstreckt, innerhalb des Hohlraums gebildet werden muss. Zur Herstellung solcher im Wesentlichen punktuellen Vorsprünge in einer Kavität sind aufwendige Hinterschnitte notwendig, wodurch die Herstellung technisch anspruchsvoll, zeit- und kostenintensiv wird.

Die gleichen Nachteile ergeben sich in folgendem Stand der Technik.

Die Druckschrift US 10,153,586 B1 betrifft eine Vorrichtung zur Positionssicherung (CPA). An der CPA erstreckt sich mindestens ein elastisch verformbarer Balken von einem Basisteil in eine Richtung weg von einem hinteren Ende der Basis. In dem mindestens einen elastisch verformbaren Balken ist ein Metallelement vorgesehen. Das Metallelement ist so eingerichtet, dass es der CPA zusätzliche Festigkeit und Stabilität verleiht. Dabei verhindern Vorsprünge an einem Gehäuse eines Steckverbinders ein Fügen der CPA von einer ersten Position in eine finale zweite Position, solange kein passender Gegensteckverbinder gesteckt ist.

Die Druckschrift WO 2021/182035 A1 betrifft einen Verbinder, aufweisend: ein erstes Gehäuse und ein zweites Gehäuse und ein Abtastelement, das so angeordnet ist, dass es in der Lage ist, sich in eine Bereitschaftsposition und eine Abtastposition in Bezug auf das erste Gehäuse zu bewegen, wobei es dem Abtastelement ermöglicht wird, sich von der Bereitschaftsposition in die Abtastposition zu bewegen, wenn die Gehäuse korrekt zusammengefügt sind.

Die Druckschrift EP 1 235 311 A2 betrifft eine elektrische Verbinderbaugruppe, die eine Verbinderpositionssicherungsvorrichtung (CPA) sowie einen Stecker und einen Gegenstecker umfasst. Der Stecker und der Gegenstecker haben zusammenpassende Schnittstellen und sind miteinander verbunden, um eine elektrische Verbindung zwischen ihnen herzustellen. Eine ablenkbare Verriegelungsbaugruppe ist an einer Außenfläche des Steckers angebracht und umfasst Verriegelungsträger, die relativ zum Stecker und zum Gegenstecker entlang einer Achse quer zur Eingriffsrichtung zwischen Stecker und Gegenstecker von Seite zu Seite ablenkbar sind.

### Beschreibung der Erfindung

Es ist daher eine Aufgabe der vorliegenden Erfindung einen Steckverbinder, sowie einen passenden Gegensteckverbinder, bereitzustellen, die die Normvorgaben im Automotive Bereich erfüllen, wie neben Befestigungsmitteln auch eine CPA Sicherung aufzuweisen, und die einfach herzustellen sind.

Die oben genannte Aufgabe wird durch einen Steckverbinder nach Anspruch 1 sowie ein Steckverbindungssystem nach Anspruch 9 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch einen Steckverbinder aufweisend ein Gehäuse, das zum Herstellen einer Verbindung in eine Aufnahme eines Gegensteckverbinders einführbar ist, ein CPA-Element, das gegenüber dem Gehäuse, bevorzugt entlang einer Verbindungsrichtung, zumindest zwischen einer Vorverraststellung und einer Endverraststellung bewegbar ist, wobei das CPA-Element in der Endverraststellung ein Lösen der Verbindung zwischen Steckverbinder und Gegensteckverbinder verhindert, eine Halterung mit einer Aufnahme in Verbindungsrichtung und zumindest einer Öffnung quer zur Verbindungsrichtung, wobei die Halterung an einer äußeren Oberfläche des Gehäuses angeordnet ist, und das CPA-Element in die Aufnahme einführbar ist, und zumindest einen ersten Vorsprung, der an dem CPA-Element gebildet ist, wobei eine Bewegung des CPA-Elements von der Vorverraststellung in die Endverraststellung blockiert ist, wenn der zumindest eine erste Vorsprung in Eingriff mit der zumindest einen Öffnung an der Halterung steht, und die Bewegung möglich ist, wenn der zumindest eine erste Vorsprung nicht in Eingriff mit der zumindest einen Öffnung an der Halterung steht.

Der vorliegende Steckverbinder verwendet als Basis für die Verbindung von Steckerbauteil und CPA-Element nicht wie im Stand der Technik das weibliche Steckerbauteil sondern das männliche. Darüber hinaus sind blockierende Vorsprünge, die sich insbesondere quer zu einer Verbindungsrichtung von Steckverbinder und Gegensteckverbinder erstrecken, nicht wie im Stand der Technik am Gehäuse des Steckerbauteils sondern an dem CPA-Element gebildet. Diese strukturellen Unterschiede zum Stand der Technik ermöglichen das Bilden von Vorsprüngen an frei zugänglichen Stellen, und vermeiden ein Bilden von Vorsprüngen und/oder Vertiefungen innerhalb von Aufnahmen oder Kavitäten am Steckerbauteil, was wesentlich komplexer ist. Weiterhin sind am Steckverbinder lediglich Öffnungen notwendig, in die die Vorsprünge am CPA-Element in einer Vorverraststellung eingreifen können, um das CPA-Element an dem Steckverbinder zu halten, zu führen und erst in eine Endverraststellung bewegen zu lassen, wenn ein passender Gegensteckverbinder mit dem Steckverbinder verbunden ist. Durch die nach Außen offenen Strukturen können die Steckerbauteile, d.h. Steckverbinder und passender Gegensteckverbinder, und auch das CPA-Element einfacher hergestellt werden. Bevorzugt werden die Steckerbauteile sowie das CPA-Element in Spritzgussverfahren hergestellt. Insbesondere aus strukturmechanischen und wirtschaftlichen Gesichtspunkten bringen Spritzgussverfahren Vorteile. Zum Beispiel können Alterungseffekte, welche bei 3D-Druckbauteilen bedingt durch die Beschaffenheit der 3D-Druckmaterialien auftreten, vermieden werden. Zudem können die Bauteile im Spritzgussverfahren mit den erforderlichen Festigkeitswerten hergestellt werden. Ein 3D-Druckverfahren findet im Wesentlichen nur Anwendung, wenn Prototypen erstellt werden sollen. Die vorliegenden Bauteile wurden so gestaltet, dass die Erstellung von entsprechenden Spritzgussformen einfach gehalten werden kann. Diese Herstellung spart Zeit und Kosten.

Bevorzugt umfasst die Halterung ein Bügelelement, wobei das Bügelelement die Aufnahme bildet in die das CPA-Element einführbar ist, und das Bügelelement umschließt bevorzugt Teile eines Befestigungsmittels, zum Befestigen von Steckverbinder und Gegensteckverbinder, am Steckverbinder. Das Bügelelement übernimmt damit mehrere Funktionen gleichzeitig, was platzsparend und effizient ist. Die Aufnahme, die im Wesentlichen nur durch das Bügelelement gebildet ist, bildet eine sehr große Öffnung, so dass eine Anordnung eines CPA-Elements in der Aufnahme einfach ist. Es entfällt ein diffiziles Einführen wie in einer engeren Öffnung. Das Bügelelement schützt weiterhin zumindest einen Teil der Befestigungsmittel vor äußeren Einflüssen. Insbesondere schützt das Bügelelement die Lasche an dem Befestigungsmittel vor einer ungewollten Betätigung.

Bevorzugt weist das CPA-Element eine Lippe auf, die ausgebildet ist das Befestigungsmittel am Steckverbinder zum Lösen der Verbindung zwischen Steckerverbinder und Gegensteckverbinder zu betätigen. Die Lippe ermöglicht ein Betätigen der Lasche am Befestigungsmittel, auch wenn die Lasche von dem Bügelelement von außen umschlossen bzw. verdeckt ist. Es ist kein Werkzeug notwendig, um die Verbindung zwischen Steckverbinder und Gegensteckverbinder in der Vorverraststellung zu lösen.

Bevorzugt weist das CPA-Element zwei, bevorzugt parallele, Arme auf, die sich, wenn sich das CPA-Element in der Vorverraststellung befindet, in Richtung einer Kontaktöffnung des Steckverbinders erstrecken und jeweils zumindest einen ersten Vorsprung aufweisen, wobei die zwei Arme, beim Verbinden des Steckverbinders mit einem Gegensteckverbinder, quer zur Verbindungsrichtung auslenkbar sind und dabei den Eingriff der jeweiligen ersten Vorsprünge aus den jeweiligen Öffnungen in der Halterung lösen, so dass das CPA-Element in eine Endverraststellung bewegbar ist. Die Anordnung von zwei Armen bietet eine Redundanz, da auch mit nur einem Arm ein Verschieben des CPA-Elements von der Vorverraststellung in die Endverraststellung ohne die Verbindung eines passenden Gegensteckverbinders am Steckverbinder nicht möglich ist. Weiterhin erstrecken sich die beiden Arme bevorzugt über eine gesamte Breite des CPA-Elements, so dass ein Verkeilen beim Einführen des CPA-Elements in die Halterung verhindert wird.

Das CPA-Element weist zumindest einen zweiten Vorsprung auf, der in der gleichen Richtung um eine Längendifferenz weiter von dem CPA-Element als der zumindest eine erste Vorsprung absteht. Die Längendifferenz stellt sicher, dass der zweite Vorsprung weder in der Vorverraststellung noch in der Endverraststellung aus dem Eingriff mit der Öffnung, in der er angeordnet ist, gelöst wird. Der zweite Vorsprung bildet eine Führung für das CPA-Element.

Der zumindest eine zweite Vorsprung befindet sich in der Vorverraststellung an einer ersten Position und in der Endverraststellung an einer zweiten Position in der zumindest einen Öffnung, wobei der zumindest eine zweite Vorsprung in der zweiten Position eine Weiterbewegung des CPA-Elements in Verbindungsrichtung verhindert. Der zumindest eine zweite Vorsprung ist in der Vorverraststellung an der ersten Position an einem der Anschlagsfläche gegenüberliegendem Ende der Öffnung angeordnet. In dieser Position verhindert der zweite Vorsprung ein Herausbewegen des CPA-Elements, entgegen der Verbindungsrichtung, aus der Halterung. In der zweiten Position liegt der zweite Vorsprung an der Anschlagsfläche an und verhindert ein Weiterbewegen des CPA-Elements in Verbindungsrichtung. Somit kann auch bei großer Krafteinwirkung ein ungewolltes Weiterbewegen des CPA-Elements in Richtung des Gegensteckverbinders vermieden werden.

Bevorzugt ist der zumindest eine erste Vorsprung in der Vorverraststellung in beide Richtungen entlang der Verbindungsrichtung, insbesondere durch eine Anschlagsfläche und Rastmittel, bewegungsgehemmt. Dieser Aufbau sichert das CPA-Element in seiner Position. Das Rastmittel kann jedoch mit einer moderaten Kraft überwunden werden, um die Position des CPA-Elements bewusst zu verändern.

Bevorzugt umfasst der Steckverbinder einen männlichen Steckverbinder für eine elektrische und/oder optische Verbindung. Ein männlicher Steckverbinder ist der Gegenpart zu einem weiblichen Steckverbinder. Der männliche Steckerverbinder ist im Wesentlichen aus einem Hohlzylinder gebildet, an dem für zusätzliche Funktionen Aufbauten oder Vorsprünge gebildet sind. Steckerbauteile mit der gleichen Funktion müssen in der Regel sehr unterschiedlich konstruiert werden, je nachdem, ob sie am männlichen oder weiblichen Steckverbinder angeordnet werden.

Ein Gegensteckverbinder weist ein Gehäuse auf, das eine Aufnahme bildet, in die ein Steckverbinder zumindest teilweise einführbar ist, zumindest einen Vorsprung, der in der Aufnahme angeordnet ist und der zumindest Teile eines eingeführten CPA-Elements an dem Steckverbinder quer zu einer Verbindungsrichtung bewegen kann, wobei der zumindest eine Vorsprung einen Teil der Innenwandung der Aufnahme bildet. Das Merkmal, dass der Vorsprung ein Teil der Innenwandung ist, bedeutet, dass sich der Vorsprung an der Innenwandung entlang der Verbindungsrichtung erstreckt und nicht nur eine punktuelle Erhebung ist. Dadurch kann der Vorsprung einfach durch die Ausgestaltung bzw. Formung der Innenwandung der Aufnahme gebildet werden, ohne dass zusätzliche Hinterschnitte oder dergleichen gebildet werden müssen. Dieser Aufbau erleichtert die Herstellung von entsprechenden Spritzgussformen und ermöglicht insbesondere die Herstellung des Gegensteckverbinders in einem Spritzgussverfahren.

Die oben genannte Aufgabe wird weiterhin insbesondere gelöst durch ein Steckverbindungssystem zumindest aufweisend einen Steckverbinder und einen Gegensteckverbinder. Der Steckverbinder und der Gegensteckverbinder bilden im zusammengebauten Zustand eine Verbindung für elektrische und/oder optische Signale. Die Verbindung ist zumindest durch Befestigungsmittel befestigt und weiterhin durch ein CPA-Element gesichert. Somit ist die Verbindung beständig und sicher vor einem ungewollten Lösen. Die Bauteile sind aufgrund ihrer Struktur einfach herzustellen.

Die folgende Beschreibung von Ausführungsbeispielen erfolgt unter Bezugnahme auf die begleitenden Figuren. Dabei zeigen:
- Fig. 1: eine perspektivische Ansicht einer Ausführungsform eines Steckverbindungssystems mit CPA-Element in der Vorverraststellung;
- Fig. 2: eine perspektivische Ansicht einer Ausführungsform eines Steckverbinders mit einem CPA-Element in der Vorverraststellung;
- Fig. 3: eine perspektivische Ansicht einer Ausführungsform eines CPA-Elements; und
- Fig. 4: eine perspektivische Ansicht einer Ausführungsform eines Gegensteckverbinders.

Im Folgenden werden Ausführungsbeispiele im Detail mit Bezug auf die Figuren beschrieben.

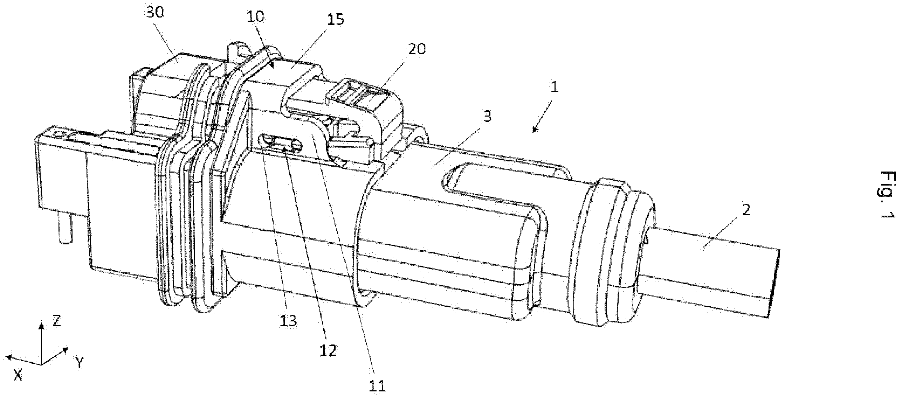

Fig. 1 zeigt ein Ausführungsbeispiel eines Steckverbindungssystems im zusammengesteckten Zustand. Das Steckverbindungssystem weist in dem dargestellten Ausführungsbeispiel einen Steckverbinder 1 und einen Gegensteckverbinder 30 auf. Der Steckverbinder 1 und der Gegensteckverbinder 30 wurden entlang einer Verbindungsrichtung X miteinander verbunden, d.h. ein Teil des Steckverbinders 1 wurde in eine Aufnahme 32 am Gegensteckverbinder 30 eingeführt. Der Steckverbinder 1 wird auch als männlicher Steckverbinder bezeichnet. Der Gegensteckverbinder 30 wird auch als weiblicher Steckverbinder oder Buchse bezeichnet.

Der Steckverbinder 1 und der Gegensteckverbinder 30 weisen weiterhin korrespondierende Befestigungsmittel 7 auf. Die Befestigungsmittel 7 am Steckverbinder 1 sind als Vorsprung am Gehäuse 3 des Steckverbinders 1 gebildet. In dem dargestellten Ausführungsbeispiel umfasst das Befestigungsmittel 7 am Steckverbinder 1 zumindest eine Rastnase 8 und am Gegensteckverbinder 30 eine passende Öffnung 38, in welche die Rastnase 8 beim Herstellen der Verbindung eingreifen kann, um eine Rastverbindung zu bilden. Die Rastverbindung ermöglicht eine schnelle, haltbare und wieder lösbare Sicherung. Die Rastverbindung wird auch als Primärverriegelung zwischen Steckverbinder 1 und Gegensteckverbinder 30 bezeichnet. Die Verbindung ist weiterhin durch ein CPA-Element (Connector Position Assurance) 20 gegen ein unbeabsichtigtes Lösen gesichert. Das CPA-Element 20 ist eine Art Verriegelungselement für die Rastverbindung. Das CPA-Element 20 ist, wenn es an der Halterung 10 des Steckverbinders 1 angebracht wurde, zwischen einer Vorverraststellung und einer Endverraststellung entlang der Verbindungsrichtung X bewegbar, bevorzugt verschiebbar. Dabei ist das CPA-Element 20 derart gestaltet, dass es erst dann von der Vorverraststellung in die Endverraststellung verschiebbar ist, wenn sich der Steckverbinder 1 mit einem vorbestimmten Abschnitt in der Nähe der Kontaktöffnung 4 vollständig in dem Gegensteckverbinder 30 befindet. Wenn der Steckverbinder 1 wie gerade beschrieben mit dem Gegensteckverbinder 30 zusammengesteckt wurde und das CPA-Element 20 anschließend von der Vorverraststellung in die Endverraststellung bewegt wurde, wirkt der Steckverbinder 1 über das CPA-Element 20 blockierend auf die Rastverbindung zwischen Steckverbinder 1 und Gegensteckverbinder 30. Durch die Verriegelung mit dem CPA-Element 20 kann eine fehlbetätigende Lösung der Rastverbindung verhindert werden. Nachdem das CPA-Element 20 wieder von der Endverraststellung zurück in die Vorverraststellung bewegt wurde, kann die Rastverbindung über die Betätigung der Lasche 9, die indirekt über die Betätigung der Betätigungsfläche 28 an dem CPA-Element 20 erfolgt, gelöst werden.

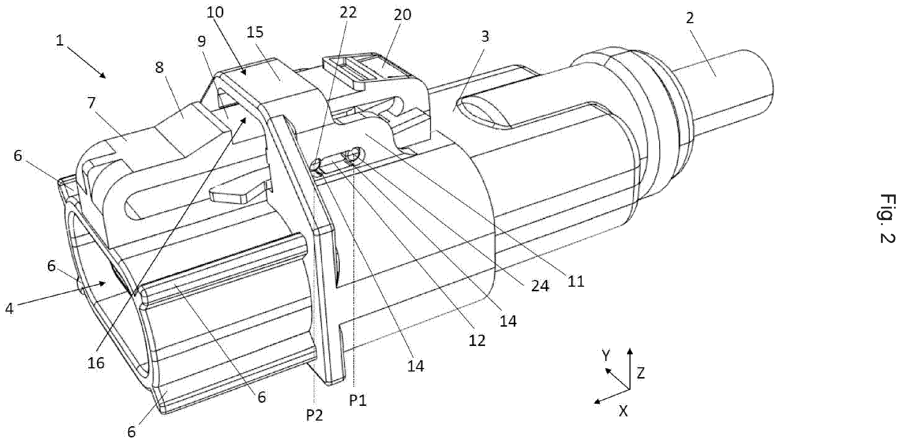

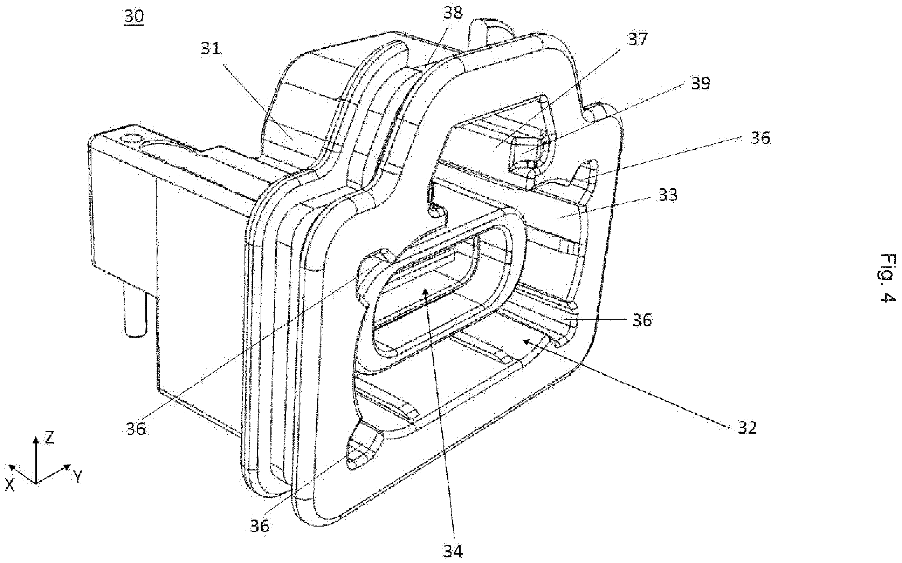

Fig. 2 zeigt ein Ausführungsbeispiel eines Steckverbinders 1. Der Steckverbinder 1 umfasst einen männlichen Steckverbinder für eine elektrische und/oder optische Verbindung. In dem dargestellten Ausführungsbeispiel umfasst der Steckverbinder 1 Kontaktelemente für eine USB Verbindung (vgl. Kontaktöffnungen 4, 34 in Figs. 2 und 4). In alternativen Ausführungsformen kann der Steckverbinder 1 Kontaktelemente für andere Verbindungen umfassen. Der dargestellte Steckverbinder 1 ist mit einer Leitung 2 zur Weiterleitung von Signalen verbunden.

Der Steckverbinder 1 weist ein Gehäuse 3 auf. Das Gehäuse 3 ist im Wesentlichen ein Hohlzylinderbauteil. Das Gehäuse 3 ist zum Herstellen einer Verbindung des Steckverbinders 1 mit einem passenden Gegensteckverbinder 30 geeignet in eine Aufnahme 32 am Gegensteckverbinder 30 eingeführt zu werden. Damit nur ein passender Gegensteckverbinder 30 mit dem Steckverbinder 1 verbunden werden kann, weist das Gehäuse bevorzugt in der Nähe der Kontaktöffnung 4 eine Kodierung 6 auf. Die Kodierung 6 passt zu einer komplementären Kodierung 36 an einem passenden Gegensteckverbinder 30. In Fig. 2 ist die Kodierung 6 durch vier Vorsprünge dargestellt, die sich an der Kontaktöffnung 4 von dem Gehäuse 3 erstrecken. In alternativen Ausführungsformen kann die Anzahl und Form der Kodierungen 6 variieren.

Das Gehäuse 3 weist weiterhin eine Halterung 10 mit einer Aufnahme 16 in Verbindungsrichtung X und zumindest einer Öffnung 12 quer zur Verbindungsrichtung X auf. Die Halterung 10 ist an einer äußeren Oberfläche des Gehäuses 3 angeordnet. Die Halterung 10 befindet sich bevorzugt an einer Seite des Gehäuses 3, sie könnte sich in alternativen Ausführungsformen auch über zwei oder mehr Seiten erstrecken bzw. an ihnen angeordnet sein. Die Halterung 10 umfasst ein Bügelelement 15. Neben zwei Vorsprüngen 11, die bevorzugt in Verbindungsrichtung X am Gehäuse 3 angeordnet sind, verbindet das Bügelelement 15 die beiden Vorsprünge 11 und bildet die Aufnahme 16. In die Aufnahme 16 kann das CPA-Element 20 eingeführt werden. Der Schritt des Einfügens findet bevorzugt während einer Vormontage statt. Bei der Endmontage des Steckverbinders 1, zum Beispiel in einem Fahrzeug, ist das CPA-Element 20 bevorzugt bereits über die Halterung 10 am Steckverbinder 1 angeordnet. Das Bügelelement 15 der Halterung 10 umschließt bevorzugt Teile des Befestigungsmittels 7, zum Befestigen von Steckverbinder 1 und Gegensteckverbinder 30, am Steckverbinder 1. Insbesondere ist die Lasche 9, zum Lösen der Verbindung, unterhalb des Bügelelements 15 bzw. zwischen Bügelelement 15 und Gehäuseoberfläche angeordnet. Durch diese Anordnung schützt die Halterung 10 das Befestigungsmittel 7, insbesondere die Lasche 9, vor einem unbeabsichtigten Betätigen und generell vor äußeren Einflüssen. In dem in Fig. 2 dargestellten Ausführungsbeispiel ist die zumindest eine Öffnung 12 in einem Vorsprung 11 der Halterung 10 gebildet. Bevorzugt ist in jedem der Vorsprünge 11 der Halterung 10 zumindest eine Öffnung 12 gebildet. Die Form und Größe der Öffnung 12 ist an die ersten Vorsprünge 22, die mit der Öffnung 12 in Eingriff gebracht und wieder gelöst werden können, angepasst. Die Öffnung 12 weist zumindest eine Anschlagsfläche 13 auf, an der ein erster Vorsprung 22 in der Vorverraststellung in der Öffnung 12 anliegt. Die Anschlagsfläche 13 verhindert in der Vorverraststellung, wenn zumindest ein erster Vorsprung 22 des CPA-Elements 20 in Eingriff mit einer Öffnung 12 steht, ein Bewegen des CPA-Elements 20 entlang der Verbindungsrichtung X in die Endverraststellung. Eine ungewollte Bewegung des CPA-Elements in entgegengesetzter Richtung, d.h. weg von der Kontaktöffnung 4 des Steckverbinders 1, kann durch zumindest ein Rastmittel 14 verhindert werden. Das Rastmittel 14 ist in einem Ausführungsbeispiel eine kleine Erhebung oder Vorsprung. Mit ein wenig Kraft, hervorgerufen durch eine bestimmte, gewollte, Bewegung, kann das Rastmittel 14 von dem CPA-Element 20 überwunden werden.

Die Öffnung 12 kann weitere Rastmittel 14, beispielsweise zusätzliche Rastmittel 14 für einen zweiten Vorsprung 24 am CPA-Element 20, umfassen.

Der Steckverbinder 1 ist insbesondere aus Kunststoff gebildet. Der Steckverbinder 1 kann mit bekannten Herstellungsverfahren hergestellt werden. Der Steckverbinder 1 kann als Formbauteil in einem separaten Schritt hergestellt werden und anschließend an der Leitung 2 montiert werden, oder durch Umspritzen direkt an der Leitung 2 gebildet werden. Insbesondere die Kodierung 6, die Befestigungsmittel 7 und die Halterung 10 können in separaten Schritten an dem Gehäuse 3, als separate Bauteile durch Montage oder durch Umspritzen, befestigt und/oder gebildet werden, oder in einem Prozess mit dem Gehäuse 3 erzeugt werden. Alle Strukturen am Steckverbinder 1 umfassen Vorsprünge oder Öffnungen, die frei zugänglich sind, d.h. insbesondere die Vorsprünge sind nicht innerhalb von Aussparungen oder Vertiefungen angeordnet. Durch diesen Aufbau ist der Steckverbinder 1 in bekannten Herstellungsverfahren einfach, insbesondere ohne aufwendige Hinterschnitte bilden zu müssen, herstellbar. Daneben kann der Steckverbinder 1 auch in 3D-Druckverfahren hergestellt werden.

Der Steckverbinder 1 weist weiterhin ein CPA-Element 20 auf. Das CPA-Element 20 ist insbesondere ein separates Bauteil. Das CPA-Element 20 ist bevorzugt spiegelsymmetrisch zu einer Spiegelachse aufgebaut. Die Symmetrie vereinfacht den Aufbau bzw. die Herstellung und Verwendung. Wie bereits beschrieben ist das CPA-Element 20 in die Aufnahme 16 am Steckverbinder 1 einführbar und kann dort gehalten werden. Das CPA-Element 20 wird bevorzugt während einer Vormontage des Steckverbinders 1 in einer Vorverraststellung in der Halterung 10 angeordnet. Das CPA-Element 20 ist gegenüber dem Gehäuse 3, bevorzugt entlang der Verbindungsrichtung X, zumindest zwischen einer Vorverraststellung und einer Endverraststellung bewegbar. Das CPA-Element 20 hat die Funktion eines Verriegelungselements für die Befestigungsmittel 7 am Steckverbinder 1. Das CPA-Element 20 verhindert in der Endverraststellung ein Lösen der Verbindung zwischen Steckverbinder 1 und Gegensteckverbinder 30.

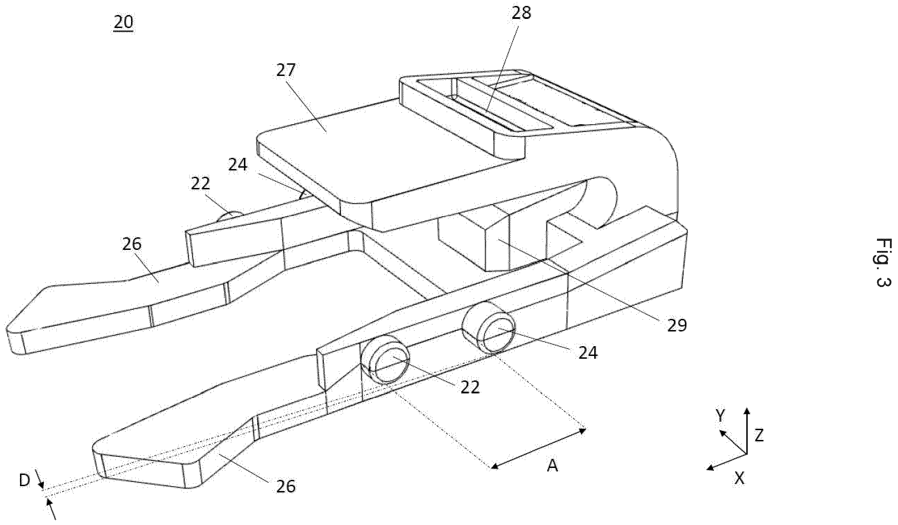

Ein Ausführungsbeispiel eines CPA-Elements 20 ist separat in Fig. 3 dargestellt. Das dargestellte CPA-Element 20 weist zumindest zwei Arme 26 auf. Die zwei Arme 26 sind elastisch gebildet und/oder gehalten. Die Arme 26 werden beim Fügen des Steckverbinders 1 in den Gegensteckverbinder 30 quer, insbesondere senkrecht und aufeinander zu, zur Verbindungsrichtung X ausgelenkt. An ihren äußeren freiliegenden Enden weisen die zwei Arme 26 abgeschrägte Formen, insbesondere Kanten, auf. Die Gestaltung der Kanten ist so angepasst, die Arme 26 beim Zusammenstoßen mit anderen Bauteilen, zum Beispiel einem Gegensteckverbinder 30 in eine bestimmte Richtung auszulenken. Im dargestellten Ausführungsbeispiel sollen die Arme 26 beim Zusammenstoßen mit einem Gegensteckverbinder 30 aufeinander zu bewegt werden.

An jedem Arm 26 ist zumindest ein erster Vorsprung 22 gebildet. Die ersten Vorsprünge 22 sind in der Vorverraststellung in Eingriff mit jeweils einer Öffnung 12 an der Halterung 10 des Steckverbinder 1 gebracht. Die ersten Vorsprünge 22 blockieren im nicht-gesteckten oder unverbundenen Zustand von Steckverbinder 1 und Gegensteckverbinder 30 eine Bewegung des CPA-Elements 20 von der Vorverraststellung in die Endverraststellung. Erst im gesteckten oder verbundenen Zustand wird die Blockade aufgehoben. Durch die Auslenkung der Arme 26 beim Fügen oder Verbinden werden die ersten Vorsprünge 22 an den Armen 26 nach Innen ausgelenkt und können aus dem Eingriff mit der jeweiligen Öffnung 12 gelöst werden. Wenn die ersten Vorsprünge 22 aus dem Eingriff gelöst sind, kann das CPA-Element 20 in die Endverraststellung bewegt werden.

In dem in Fig. 3 dargestellten Ausführungsbeispiel weist das CPA-Element 20 zumindest einen zweiten Vorsprung 24 an jedem Arm 26 auf. Jeder zweite Vorsprung 24 steht in der gleichen Richtung, insbesondere quer zur Verbindungsrichtung X, wie der jeweilige erste Vorsprung 22 am gleichen Arm 26 ab. Jeder zweite Vorsprung 24 steht dabei um eine Längendifferenz D weiter von dem CPA-Element 20 als der zumindest eine erste Vorsprung 22 ab. Die Längendifferenz D liegt bevorzugt im Bereich von wenigen Millimetern und ist so angepasst, dass die Auslenkung der Arme 26 nicht bewirken kann, dass die zweiten Vorsprünge 24 aus dem Eingriff mit der Öffnung 12 gelöst werden. Die zweiten Vorsprünge 24 dienen als Führung für das CPA-Element 20. Jeweils erste und zweite Vorsprünge 22, 24 an einer Seite des CPA-Elements 20 sind um einen Abstand A in Verbindungsrichtung X versetzt angeordnet. Der Abstand A entspricht der Länge, um die das CPA-Element 20 von der Vorverraststellung in die Endverraststellung bewegt wird. In dem in Figs. 1 und 2 dargestellten Ausführungsbeispiel befindet sich jeder zweite Vorsprung 24 in der Vorverraststellung an einer ersten Position P1 und in der Endverraststellung an einer zweiten Position P2 in der jeweiligen Öffnung 12. Wenn die zweiten Vorsprünge 24 in der zweiten Position P2 angeordnet sind, verhindern sie eine Weiterbewegung des CPA-Elements 20 in Verbindungsrichtung X.

Das CPA-Element weist weiterhin einen Stopper 29 auf. Der Stopper 29 ist in der Endverraststellung zwischen der Lasche 9 des Befestigungsmittels 7 am Steckverbinder 1 und der Gehäuseoberfläche angeordnet und verhindert ein Betätigen der Lasche 9. Somit verriegelt das CPA-Element 20 das Befestigungsmittel 7 bzw. die Primärverriegelung und ein unbeabsichtigtes Lösen wird verhindert.

Weiterhin weist das CPA-Element 20 eine Lippe 27 auf. Die Lippe 27 ist ausgebildet das Befestigungsmittel 7 am Steckverbinder 1 zum Lösen der Verbindung zwischen Steckerverbinder 1 und Gegensteckverbinder 30 zu betätigen. Die Lippe 27 ist sowohl in der Vor- als auch in der Endverraststellung zwischen dem Bügelelement 15 und der Lasche 9 angeordnet. Die Lippe 27 kann nur in der Vorverraststellung ausgelenkt bzw. betätigt werden. In der Endverraststellung würde die Lippe 27 beim Auslenken in Richtung des Gehäuses 3 auf die Lasche 9 drücken, wobei die Lasche 9 durch den Stopper 29 an einer Bewegung gehemmt ist. Die Lippe 27 wird mit Hilfe der Betätigungsfläche 28 bewegt. Die Betätigungsfläche 28 ist frei liegend und vom Montagepersonal gut zu erreichen bzw. betätigen. Beim Betätigen der Betätigungsfläche 28 in Richtung des Gehäuses 3, werden die Lippe 27 und dadurch auch die Lasche 9 in Richtung des Gehäuses 3 bewegt, wodurch die Verbindung zwischen Steckverbinder 1 und Gegensteckerbinder 30 gelöst werden kann.

Die Betätigungsfläche 28 bildet weiterhin in der Endverraststellung einen Anschlag zur Bewegungsbegrenzung für die Lippe 27 bzw. das CPA-Element 20 in Verbindungsrichtung X. Das Anliegen der Betätigungsfläche 28 an der Halterung 10, und insbesondere am Bügelelement 15, kann als visuelles Feedback verwendet werden, dass sich das CPA-Element 20 in der Endverraststellung befindet.

Fig. 4 zeigt ein Ausführungsbeispiel eines Gegensteckverbinders 30. Der Gegensteckverbinder 30 weist ein Gehäuse 31, das eine Aufnahme 32 bildet, in die ein Steckverbinder 1 einführbar ist, auf. Der Steckverbinder 1 wird für eine vollständige Verbindung um einen vorbestimmten Abschnitt in der Nähe der Kontaktöffnung 4 in den Gegensteckverbinder 30 eingeführt und dann an dem Gegensteckverbinder 30, insbesondere an der Öffnung 38, mit Hilfe der Befestigungsmittel 7, insbesondere mit Hilfe der Rastnase 8, befestigt.

Der Gegensteckverbinder 30 weist zumindest einen Vorsprung 37 auf, der in der Aufnahme 32 angeordnet ist. In dem dargestellten Ausführungsbeispiel umfasst die Aufnahme 32 zwei gegenüberliegende Vorsprünge 37. Im Allgemeinen ist die Anzahl an Vorsprüngen 37 an die Anzahl an Armen 26 am CPA-Element 20 angepasst. Die Vorsprünge 37 bewegen beim Ineinanderstecken von Steckverbinder 1 und Gegensteckverbinder 30 die beiden Arme 26 des eingeführten CPA-Elements 20 am Steckverbinder 1 quer zur Verbindungsrichtung X, insbesondere aufeinander zu, so dass das CPA-Element 20, wie bereits beschrieben, von einer Vorverraststellung in eine Endverraststellung bewegt werden kann. Am offenen Ende der Aufnahme 32 können die Vorsprünge 37 Führungen 39 aufweisen, die das Zusammenstecken von Steckverbinder 1 und Gegensteckverbinder 30 erleichtern. Die beiden Vorsprünge 37 sind Teil der Innenwandung 33 der Aufnahme. Insbesondere erstrecken sich die Vorsprünge 37 in Verbindungsrichtung in der Ausnahme 32, und nicht quer.

Der Gegensteckverbinder 30 ist bevorzugt aus Kunststoff gebildet. Der Gegensteckverbinder 30 kann mit bekannten Herstellungsverfahren, insbesondere Spritzgussverfahren, hergestellt werden. Alle Strukturen, und insbesondere die Vorsprünge 37, am Gegensteckverbinder 1 können ohne aufwendige Hinterschnitte innerhalb von Vertiefungen und Kavitäten mit bekannten Herstellungsverfahren gebildet werden. Somit ist der Gegensteckverbinder 30 einfach herstellbar.

### BEZUGSZEICHENLISTE

- 1: Steckverbinder
- 2: Leitung
- 3: Gehäuse
- 4: Kontaktöffnung
- 6: Kodierung
- 7: Befestigungsmittel
- 8: Rastnase
- 9: Lasche
- 10: Halterung
- 11: Vorsprung
- 12: Öffnung
- 13: Anschlagsfläche
- 14: Rastmittel
- 15: Bügelelement
- 16: Aufnahme
- 20: CPA-Element
- 22: erster Vorsprung
- 24: zweiter Vorsprung
- 26: Arm
- 27: Lippe
- 28: Betätigungsfläche
- 29: Stopper
- 30: Gegensteckverbinder
- 31: Gehäuse
- 32: Aufnahme
- 33: Innenwandung
- 34: Kontaktöffnung
- 36: Kodierung
- 37: Vorsprung
- 38: Öffnung
- 39: Führung
- A: Abstand
- D: Längendifferenz
- P1: erste Position
- P2: zweite Position
- X, Y, Z: Koordinatenachsen

## Patentansprüche

1. Steckverbinder (1) aufweisend:
a. ein Gehäuse (3), das zum Herstellen einer Verbindung in eine Aufnahme (32) eines Gegensteckverbinders (30) einführbar ist;
b. ein CPA-Element (20), das gegenüber dem Gehäuse (3), bevorzugt entlang einer Verbindungsrichtung (X), zumindest zwischen einer Vorverraststellung und einer Endverraststellung bewegbar ist, wobei das CPA-Element (20) in der Endverraststellung ein Lösen der Verbindung zwischen Steckverbinder (1) und Gegensteckverbinder (30) verhindert;
c. eine Halterung (10) mit einer Aufnahme (16) in Verbindungsrichtung (X) und zumindest einer Öffnung (12) quer zur Verbindungsrichtung (X), wobei die Halterung (10) an einer äußeren Oberfläche des Gehäuses (3) angeordnet ist, und das CPA-Element (20) in die Aufnahme (16) einführbar ist; und
d. zumindest einen ersten Vorsprung (22), der an dem CPA-Element (20) gebildet ist; **dadurch gekennzeichnet, dass**
e. eine Bewegung des CPA-Elements (20) von der Vorverraststellung in die Endverraststellung blockiert ist, wenn der zumindest eine erste Vorsprung (22) in Eingriff mit der zumindest einen Öffnung (12) an der Halterung (10) steht, und die Bewegung möglich ist, wenn der zumindest eine erste Vorsprung (22) nicht in Eingriff mit der zumindest einen Öffnung (12) an der Halterung (10) steht;
**dadurch gegengezeichnet, dass**
f. das CPA-Element (20) zumindest einen zweiten Vorsprung (24) aufweist, der in der gleichen Richtung um eine Längendifferenz (D) weiter von dem CPA-Element (20) als der zumindest eine erste Vorsprung (22) absteht; und
g. sich der zumindest eine zweite Vorsprung (24) in der Vorverraststellung an einer ersten Position (P1) und in der Endverraststellung an einer zweiten Position (P2) in der zumindest einen Öffnung (12) befindet, wobei der zumindest eine zweite Vorsprung (24) in der zweiten Position (P2) eine Weiterbewegung des CPA-Elements (20) in Verbindungsrichtung (X) verhindert.

2. Steckverbinder (1) nach Anspruch 1, bei dem die Halterung (10) ein Bügelelement (15) umfasst, wobei das Bügelelement (15) die Aufnahme (16) bildet in die das CPA-Element (20) einführbar ist, und das Bügelelement (15) bevorzugt Teile eines Befestigungsmittels (7) am Steckverbinder (1) zum Befestigen von Steckverbinder (1) und Gegensteckverbinder (30) umschließt.

3. Steckverbinder (1) nach Anspruch 2, bei dem das CPA-Element (20) eine Lippe (27) aufweist, die ausgebildet ist das Befestigungsmittel (7) am Steckverbinder (1) zum Lösen der Verbindung zwischen Steckerverbinder (1) und Gegensteckverbinder (30) zu betätigen.

4. Steckverbinder (1) nach einem der Ansprüche 1 - 3, bei dem das CPA-Element (20) zwei, bevorzugt parallele, Arme (26) aufweist, die sich, wenn sich das CPA-Element (26) in der Vorverraststellung befindet, in Richtung einer Kontaktöffnung (4) des Steckverbinders (1) erstrecken und jeweils zumindest einen ersten Vorsprung (22) aufweisen, wobei die zwei Arme (26), beim Verbinden des Steckverbinders (1) mit einem Gegensteckverbinder (30), quer zur Verbindungsrichtung (X) auslenkbar sind und dabei den Eingriff der jeweiligen ersten Vorsprünge (22) aus den jeweiligen Öffnungen (12) in der Halterung (10) lösen, so dass das CPA-Element (20) in eine Endverraststellung bewegbar ist.

5. Steckverbinder (1) nach einem der Ansprüche 1 - 4, bei dem der zumindest eine erste Vorsprung (22) in der Vorverraststellung in beide Richtungen entlang der Verbindungsrichtung (X), insbesondere durch eine Anschlagsfläche (13) und Rastmittel (14), bewegungsgehemmt ist.

6. Steckverbinder (1) nach einem der Ansprüche 1 - 5, bei dem der Steckverbinder (1) einen männlichen Steckverbinder für eine elektrische und/oder optische Verbindung umfasst.

7. Steckverbindungssystem zumindest aufweisend einen Steckverbinder (1) nach einem der Ansprüche 1 - 6 und einen Gegensteckverbinder (30).

## Claims

1. Plug-in connector (1) comprising:
a. a housing (3) which can be inserted into a receptacle (32) of a mating plug-in connector (30) for establishing a connection;
b. a CPA element (20) which can be moved relative to the housing (3), preferably along a connecting direction (X), at least between a pre-latching position and a final latching position, wherein the CPA element (20) prevents the connection between the plug-in connector (1) and the mating plug-in connector (30) from being released in the final latching position;
c. a mount (10) having a receptacle (16) in the connecting direction (X) and at least one opening (12) transverse to the connecting direction (X), wherein the mount (10) is arranged on an outer surface of the housing (3), and the CPA element (20) can be inserted into the receptacle (16); and
d. at least one first projection (22) which is formed on the CPA element (20), **characterized in that**
E. movement of the CPA element (20) from the pre-latching position to the final latching position is blocked when the at least one first projection (22) is in engagement with the at least one opening (12) on the mount (10), and movement is possible when the at least one first projection (22) is not in engagement with the at least one opening (12) on the mount (10); **characterized in that**
f. the CPA element (20) has at least one second projection (24) which protrudes further from the CPA element (20) than the at least one first projection (22) by a length difference (D) in the same direction; and
g. the at least one second projection (24) is in the pre-latching position at a first location (P1) and in the final latching position at a second location (P2) in the at least one opening (12), wherein the at least one second projection (24) prevents further movement of the CPA element (20) in the connecting direction (X) in the second location (P2).

2. Plug-in connector (1) according to Claim 1, in which the mount (10) comprises a clip element (15), wherein the clip element (15) forms the receptacle (16) into which the CPA element (20) can be inserted, and the clip element (15) preferably surrounds parts of a fastening means (7) on the plug-in connector (1) for fastening the plug-in connector (1) and the mating plug-in connector (30).

3. Plug-in connector (1) according to Claim 2, in which the CPA element (20) has a lip (27) which is designed to actuate the fastening means (7) on the plug-in connector (1) for releasing the connection between the plug-in connector (1) and the mating plug-in connector (30).

4. Plug-in connector (1) according to any of Claims 1-3, in which the CPA element (20) has two, preferably parallel, arms (26) which, when the CPA element (26) is in the pre-latching position, extend in the direction of a contact opening (4) of the plug-in connector (1) and each have at least one first projection (22), wherein, when the plug-in connector (1) is connected to a mating plug-in connector (30), the two arms (26) can be deflected transversely to the connecting direction (X), and in so doing release the engagement of the respective first projections (22) from the respective openings (12) in the mount (10), so that the CPA element (20) can be moved to a final latching position.

5. Plug-in connector (1) according to any of Claims 1-4, in which the at least one first projection (22) is prevented from moving in both directions along the connecting direction (X), in particular by a stop face (13) and latching means (14), in the pre-latching position.

6. Plug-in connector (1) according to any of Claims 1-5, in which the plug-in connector (1) comprises a male plug-in connector for an electrical and/or optical connection.

7. Plug-in connection system at least comprising one plug-in connector (1) according to any of Claims 1-6 and one mating plug-in connector (30).

## Revendications

1. Connecteur enfichable (1) possédant :
a. un boîtier (3) qui peut être inséré dans un logement (32) d'un connecteur enfichable complémentaire (30) afin d'établir une connexion ;
b. un élément CPA (20), qui est mobile par rapport au boîtier (3), de préférence le long d'une direction de connexion (X), au moins entre une position de préencliquetage et une position d'encliquetage final, l'élément CPA (20) empêchant, dans la position d'encliquetage final, une libération de la connexion entre le connecteur enfichable (1) et le connecteur enfichable complémentaire (30) ;
c. un élément de maintien (10) pourvu d'un logement (16) dans la direction de connexion (X) et d'au moins une ouverture (12) transversalement à la direction de connexion (X), l'élément de maintien (10) étant disposé sur une surface extérieure du boîtier (3) et l'élément CPA (20) pouvant être inséré dans le logement (16) ; et
d. au moins une première saillie (22), qui est formée sur l'élément CPA (20) ; **caractérisé en ce que**
e. un mouvement de l'élément CPA (20) de la position de préencliquetage à la position d'encliquetage final est bloqué lorsque l'au moins une première saillie (22) se trouve en prise avec l'au moins une ouverture (12) de l'élément de maintien (10) et le mouvement est possible lorsque l'au moins une première saillie (22) ne se trouve pas en prise avec l'au moins une ouverture (12) sur l'élément de maintien (10) ;
**caractérisé en ce que**
f. l'élément CPA (20) possède au moins une deuxième saillie (24), qui dépasse de l'élément CPA (20) plus loin que la première saillie (22) dans la même direction d'une différence de longueur (D) ; et
g. l'au moins une deuxième saillie (24) se trouve au niveau d'une une première position (P1) dans la position de préencliquetage et au niveau d'une deuxième position (P2) dans la position d'encliquetage final dans l'au moins une ouverture (12), l'au moins une deuxième saillie (24), dans la deuxième position (P2), empêchant un mouvement supplémentaire de l'élément CPA (20) dans la direction de connexion (X).

2. Connecteur enfichable (1) selon la revendication 1, avec lequel l'élément de maintien (10) comprend un élément en étrier (20), l'élément en étrier (15) formant le logement (16) dans lequel peut être inséré l'élément CPA (15), et l'élément en étrier (1) entourant de préférence des parties d'un moyen de fixation (30) sur le connecteur enfichable (1) en vue de la fixation du connecteur enfichable (15) et du connecteur enfichable complémentaire (7).

3. Connecteur enfichable (1) selon la revendication 2, avec lequel l'élément CPA (20) possède une lèvre (27), qui est configurée pour actionner le moyen de fixation (7) sur le connecteur enfichable (1) afin de libérer la connexion entre le connecteur enfichable (1) et le connecteur enfichable complémentaire (30).

4. Connecteur enfichable (1) selon l'une des revendications 1 à 3, avec lequel l'élément CPA (20) possède deux bras (26), de préférence parallèles, qui s'étendent en direction d'une ouverture de contact (4) du connecteur enfichable (1) lorsque l'élément CPA (26) se trouve dans la position de préencliquetage et possèdent chacun au moins une première saillie (22), les deux bras (26), lors de la connexion du connecteur enfichable (1) à un connecteur enfichable complémentaire (30), pouvant être déviés transversalement par rapport à la direction de connexion (X) et libérant ainsi l'engagement des premières saillies (20) respectives hors des ouvertures (12) respectives dans l'élément de maintien (10), de sorte que l'élément CPA (22) peut être déplacé dans une position d'encliquetage final.

5. Connecteur enfichable (1) selon l'une des revendications 1 à 4, avec lequel l'au moins une première saillie (22), dans la position de préencliquetage, est empêchée de se déplacer dans les deux directions le long de la direction de connexion (X), en particulier par une surface de butée (13) et des moyens d'encliquetage (14).

6. Connecteur enfichable (1) selon l'une des revendications 1 à 5, avec lequel le connecteur enfichable (1) comprend un connecteur enfichable mâle pour une connexion électrique et/ou optique.

7. Système de connexion par enfichage comprenant au moins un connecteur enfichable (1) selon l'une des revendications 1 à 6 et un connecteur enfichable complémentaire (30).
